# EUROPEAN PATENT APPLICATION

(11) **EP 1 643 009 A1**
(43) Date of publication of application: **05.04.2006**
(21) Application number: 03762872.4
(22) Date of filing: 02.07.2003
(51) Int. Cl.: C23C 28/00

(54) **PRECOATED METAL PLATE EXCELLENT IN PRESS WORKABILITY AND METHOD FOR PRODUCTION THEREOF**

(30) Priority: 02.07.2002 JP 2002193282
(71) Applicant: NIPPON STEEL CORPORATION, Tokyo 100-8071 (JP)
(72) Inventor: The designation of the inventor has not yet been filed
(74) Representative: Vossius & Partner
(86) International application number: PCT/JP2003/008429
(87) International publication number: WO 2004/005579

(57) **Abstract**

A precoated metal sheet with excellent press-formability, comprising a metal sheet having on one surface or both surfaces thereof a chemically converted layer containing, in terms of solid contents, (a) at least one of a silane coupling agent and a hydrolytic condensate thereof, (b) a water-dispersible silica, (c) at least one of a zirconium compound and a titanium compound and (d) a water-soluble resin as essential components, and having further formed thereon a coating layer containing from 1 to 140 parts by mass of an aluminum phosphate-base pigment per 100 parts by mass of the resin solid content; and a production method thereof.

## Description

### Technical Field of the Invention

The present invention relates to a surface-treated metal material excellent in press-formability and corrosion resistance.

### Background Technique

In place of conventional post-coated products obtained by coating after working, which are used for home appliances, construction materials, automobiles and the like, a precoated metal applied with a colored coating layer is now being used. The precoated metal sheet is obtained by applying a coating material on a metal sheet subjected to a pretreatment for metals and this metal sheet is generally cut and press-formed after the covering with the coating material and is then used. Therefore, the precoated metal sheet has problems in the corrosion resistance on the cut end face part, where the metal is not covered with the coating layer but is exposed, and in the falling off of the coating layer during the press forming. However, these problems can be solved by applying a chromate treatment as a pretreatment for metal and forming a coating layer containing a hexavalent chromium-base rust-preventive pigment. Such metal sheets are being generally used at present.

However, from the standpoint of the environmental problem of hexavalent chromium which probably dissolves out in the chromate treatment or from the coating material layer containing a hexavalent chromium-base rust-preventive pigment, demands are increasing for non-chromate chemical conversion treatment and non-chromate coating material layer containing no hexavalent chromium. Japanese Unexamined Patent Publication (Kokai) No. 2001-316845 discloses a technique for providing a precoated metal sheet having excellent adhesion in the working part and having high corrosion resistance by using a chemical conversion treatment containing a silane coupling agent and/or a hydrolytic condensate thereof, a water-dispersible silica, and a zirconium compound and/or a titanium compound in place of the chromate treatment. On the other hand, Japanese Unexamined Patent Publication (Kokai) No. 9-12931 discloses a technique for providing a precoated steel sheet having excellent corrosion resistance in the cut end face part by applying a polyester-base or epoxy-base coating material where a phosphoric acid-base rust-preventive pigment and an ionexchange silica-base rust-preventive pigment are used in combination in place of the hexavalent chromium-base rust-preventive pigment.

The chemical conversion technique disclosed in Japanese Unexamined Patent Publication (Kokai) No. 2001-316845 ensures excellent adhesion to the working part in an Erichsen test or a T-bending test but has a problem in that, when press-forming represented by deep drawing is performed, the coating layer is galled by the press mold and readily separated as compared with the precoated metal sheet subjected to a chromate treatment. On the other hand, the technique disclosed in Japanese Unexamined Patent Publication (Kokai) No. 9-12931 uses zinc phosphate for the chemical conversion treatment and has a problem in that the adhesion of coating layer in the working part is insufficient as compared with the precoated metal sheet subjected to a chromate treatment and, when press-forming is performed, the coating layer is readily separated due to galling by the press mold.

An object of the present invention is to solve these problems in conventional techniques and provide a precoated metal sheet not containing hexavalent chromium and, nevertheless, exhibiting excellent corrosion resistance and further having excellent press-formability. The object of the present invention includes providing a production method for the precoated metal sheet.

### Disclosure of the Invention

The present inventors have found that when a chemically converted layer is formed from a treating solution containing (a) a silane coupling agent and/or a hydrolytic condensate thereof, (b) a water-dispersible silica and (c) a zirconium compound and/or a titanium compound as essential components and containing (d) a water-soluble resin and further thereon, a coating layer containing an aluminum phosphate-base pigment is formed, a composite coating layer very excellent not only in the corrosion resistance but also in the press-formability can be obtained.

The phenomena that a coated layer is galled by a press mold during a press-forming is considered to be a phenomena that a coated layer on a pre-coated metal sheet is rubbed by a pressing mold under a high load so that the coated layer is subjected to a shearing stress by which the coated layer is peeled from the metal sheet or the coated layer itself results in cohesive failure, by which a defect is formed. When a coating material containing an aluminum phosphate-base pigment is coated on a steel sheet having thereon a chemical conversion layer comprising (a), (b), (c) and (d) as mentioned above, and is dried and cured, the components (a), (b), (c) and (d) in the chemical conversion layer and the aluminum phosphate in the coated layer on the chemical conversion coating layer react with each other at the interface therebetween during the drying and curing step, by which the adhesion between the chemical conversion layer and the coated layer thereon significantly increases; and, further, the mechanical properties inherent to the aluminum phosphate provide enhanced shearing stress-resistance of the coated layer; and by the synergistic effect of the above significantly enhances the resistance against press-forming galling of the pre-coated metal sheet.

The present invention has been accomplished based on this finding. The gist of the present invention resides in the followings.
(1) A precoated metal sheet with excellent press-formability, comprising a metal sheet having on one surface or both surfaces thereof a chemically converted layer formed by coating and drying a treating solution containing, in terms of solid contents, (a) at least one of a silane coupling agent and a hydrolytic condensate thereof, (b) a water-dispersible silica, (c) at least one of a zirconium compound and a titanium compound and (d) a water-soluble resin as essential components, and having further formed thereon a coating layer containing from 1 to 140 parts by mass of an aluminum phosphate-base pigment per 100 parts by mass of the resin solid content.
(2) The precoated metal sheet with excellent press-formability as described in (1) above, wherein the treating solution further contains phosphate ions.
(3) The precoated metal sheet with excellent press-formability as described in (1) above, wherein the aluminum phosphate-base pigment contained in the coating layer is aluminum dihydrogentripolyphosphate.
(4) The precoated metal sheet with excellent press-formability as described in (1) or (3) above, wherein the coating layer contains a rust-preventive pigment in addition to the aluminum phosphate-base pigment and the total content of the aluminum phosphate-base pigment and the rust-preventive pigment is 140 parts by mass or less per 100 parts by mass of the resin solid content.
(5) The precoated metal sheet with excellent press-formability as described in (4) above, wherein the rust-preventive pigment contained in the coating layer is a calcium ion-exchanging silica.
(6) The precoated metal sheet with excellent press-formability as described in any one of (1) to (5) above, wherein the metal sheet is a metal sheet having a plating layer on one surface or both surfaces thereof.
(7) A method for producing a precoated metal sheet with excellent press-formability, comprising coating a treating solution containing (a) a silane coupling agent and/or a hydrolytic condensate thereof, (b) a water-dispersible silica, (c) a zirconium compound and/or a titanium compound and (d) a water-soluble resin as essential components on one surface or both surfaces of a metal sheet, drying the treating solution to form a chemically converted layer, applying thereon a coating material containing from 1 to 140 parts by mass of an aluminum phosphate-base pigment per 100 parts by mass of the resin solid content, and drying and thereby curing the coating material.
(8) The method for producing a precoated metal sheet with excellent press-formability as described in (7) above, wherein the treating solution further contains phosphate ions.
(9) The method for producing a precoated metal sheet with excellent press-formability as described in (7) above, wherein the coating material further contains a rust-preventive pigment and the total content of the rust-preventive pigment and aluminum phosphate-base pigment is 140 parts by mass or less based per 100 parts by mass of the resin solid content.
(10) A shaped article having the coating layer on the outer appearance, obtained by cutting and press-forming the precoated metal sheet described in any one of (1) to (6) above.
(11) A method for producing a shaped article, comprising cutting and press-forming the precoated metal sheet described in any one of (1) to (6) above and holding the coating layer of the shaped article without removing it.

### Brief Description of Drawings

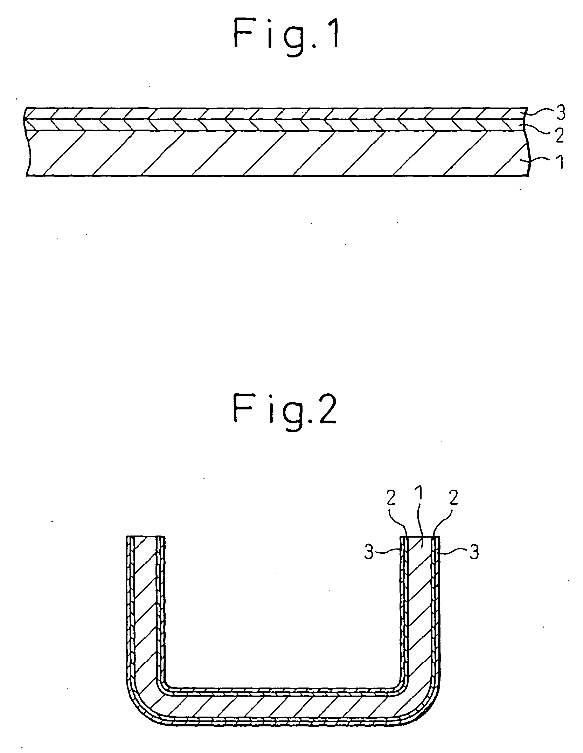

Fig. 1 is a schematic sectional view of a precoated metal sheet with excellent press-formability of the present invention. In Fig. 1, 1 is a metal sheet, 2 is a chemically converted layer and 3 is a precoated coating layer.
Fig. 2 is a sectional view of a press-formed article of the precoated metal sheet of Fig. 1. In this Figure, the numerical references are the same as in Fig. 1.

### Mode for Carrying Out the Invention

The present inventors have made extensive investigations on a non-chromate precoated metal sheet having a coating layer less gallable by a press mold at the press-forming, as a result, it has been found that the phenomenon where the coating layer is galled by a press mold and separated at the press-forming is remarkably improved by a precoated metal sheet comprising a metal sheet having on one surface or both surfaces thereof a chemically converted layer formed by coating and drying a treating solution containing (a) at least one of a silane coupling agent and a hydrolytic condensate thereof, (b) a water-dispersible silica, (c) at least one of a zirconium compound and a titanium compound and (d) a water-soluble resin as essential components, and having formed further thereon a coating layer containing an aluminum phosphate-base pigment. The phenomenon where the coating layer is galled by a press mold and separated at the press-forming is considered to occur due to a shearing force acting on the coating layer of the precoated metal sheet when the coating layer is rubbed by a press mold under a high load. Therefore, two methods can be used for improving this phenomenon. One is a method of enhancing the adhesive strength between a coating layer and a metal, and another is a method of reducing the shearing force acting on the coating layer less transmissible to the interface between a coating layer and a metal blank, which is the coating layer separation face. The reason why, when the precoated metal sheet of the present invention is press-formed, the coating layer is less galled by the press mold is not particularly known, however, it is presumed to be because the coating layer adhesion is remarkably enhanced by the synergistic effect resulting from the combination of a chemically converted layer having relatively high adhesive property and a coating layer containing an aluminum phosphate-base pigment capable of exerting an effect on the adhesion and at the same time, the shearing force generated on the coating layer at the press-forming is less transmitted to the interface between coating layer and metal blank due to the mechanical property inherent in the aluminum phosphate-base pigment.

The chemically converted layer of the precoated metal sheet of the present invention is formed by coating and drying a treating solution containing (a) at least one of a silane coupling agent and a hydrolytic condensate thereof, (b) a water-dispersible silica, (c) at least one of a zirconium compound and a titanium compound and (d) a water-soluble resin as essential components. The hydrolytic condensate of a silane coupling agent as used herein means an oligomer of a silane coupling agent, obtained by the hydrolytic polymerization of a raw material silane coupling agent.

The silane coupling agent which can be used in the present invention is not particularly limited but preferred examples thereof include vinylmethoxysilane, vinyltrimethoxysilane, vinylethoxysilane, vinyltriethoxysilane, 3-aminopropyltriethoxysilane, 3-glycidoxypropyltrimethoxysilane, 3-methacryloxypropyltrimethoxysilane, 3-mercaptopropyltrimethoxysilane, N-(1,3-dimethylbutylidene(-3-(triethoxysilyl)-1-propaneamine, N,N'-bis[3-(trimethoxysilyl)propyl]ethylenediamine, N-(β-aminoethyl)-γ-aminopropylmethyldimethoxysilane, N-(β-aminoethyl)-γ-aminopropyltrimethoxysilane, γ-aminopropyltrimethoxysilane, γ-aminopropyltriethoxysilane, γ-glycidoxypropyltrimethoxysilane, γ-glycidoxypropyltriethoxysilane, γ-glycidoxypropylmethyldimethoxysilane, 2-(3,4-epoxycyclohexyl) ethyltrimethoxysilane, γ-methacryloxypropyltrimethoxysilane, γ-methacryloxypropyltriethoxysilane, γ-mercaptopropyltrimethoxysilane, γ-mercaptopropyltriethoxysilane and N-[2-(vinylbenzylamino)ethyl]-3-aminopropyltrimethoxysilane.

Among these silane coupling agents, more preferred are vinylmethoxysilane, vinylethoxysilane, 3-aminopropyltriethoxysilane, 3-glycidoxypropyltrimethoxysilane, 3-methacryloxypropyltrimethoxysilane, 3-mercaptopropyltrimethoxysilane, N-(1,3-dimethylbutylidene)-3-(triethoxysilyl)-1-propaneamine and N,N'-bis[3-(trimethoxysilyl)propyl]ethylenediamine. One of these silane coupling agents and hydrolytic condensates thereof may be used alone or two or more thereof may be used in combination. The silane coupling agent or a hydrolytic condensate thereof has an activity of enhancing the corrosion resistance of metal sheet and the adhesion.

The water-dispersible silica which can be used in the present invention is not particularly limited but is preferably spherical silica, chained silica or aluminum-modified silica, which is reduced in impurities such as sodium and is a weak alkali. Examples of the spherical silica include colloidal silica such as "SNOWTEX N" and "SNOWTEX UP" (both produced by Nissan Chemicals Industries, Ltd.), and fumed silica such as "AEROSIL" (produced by Nippon Aerosil). Examples of the chained silica include silica gel such as "SNOWTEX PS" (produced by Nissan Chemicals Industries, Ltd.). Examples of the aluminum-modified silica include commercially available silica gel such as "Adelite AT-20A" (produced by Asahi Denka Kogyo K.K.). The water-dispersible silica has an activity of enhancing the corrosion resistance of metal sheet.

As for the zirconium compound and/or titanium compound which can be used in the present invention, examples of the zirconium compound include ammonium zirconyl carbonate, zircon hydrofluoride, zircon ammonium fluoride, zircon potassium fluoride, zircon sodium fluoride, zirconium acetylacetonate, zirconium butoxide-1-butanol solution and zirconium n-propoxide, and examples of the titanium compound include titanium hydrofluoride, titanium ammonium fluoride, potassium titanium oxalate, titanium isopropoxide, isopropyl titanate, titanium ethoxide, titanium 2-ethyl-1-hexanolate, tetraisopropyl titanate, tetra-n-butyl titanate, titanium potassium fluoride and titanium sodium fluoride. These compounds may be used individually or in combination of two or more thereof. These compounds have an activity of improving the corrosion resistance of metal sheet and at the same time, enhancing the working adhesion.

As the water-soluble resin which can be used in the present invention, a generally-known water-soluble resin may be used, such as acrylic resin, urethane resin, epoxy resin, ethylene-acrylic copolymer, phenolic resin, polyester resin, polyolefin resin, alkyd resin and polycarbonate resin. Among these, acrylic resin is preferred because the coating layer is less galled by the press mold at the press-forming. The water-soluble acrylic resin is a copolymer mainly comprising an acrylic acid and/or a methacrylic acid and examples thereof include methyl acrylate, ethyl acrylate, methyl methacrylate, ethyl methacrylate, derivatives thereof and copolymers with other acrylic monomer. In particular, the acrylic acid and/or methacrylic acid monomer preferably occupies 70% or more in the copolymer. The molecular weight of the acrylic resin is, in terms of the mass average molecular weight, preferably 10,000 or more, more preferably from 300,000 to 2,000,000. If the molecular weight exceeds 2,000,000, the viscosity becomes high and the handling and working efficiency may decrease. The water-soluble resin has an activity of improving the working adhesion, particularly, enhancing the bending adhesion and deep-drawing property.

The chemically converted layer of the present invention is formed by coating and drying a treating solution containing (a) at least one of a silane coupling agent and a hydrolytic condensate thereof, (b) a water-dispersible silica, (c) at least one of a zirconium compound and a titanium compound and (d) a water-soluble resin as essential components, therefore, good workability is attained in the formation of the chemically converted layer and the layer is easy to control.

The amount added of the silane coupling agent and/or a hydrolytic condensate thereof in the treating solution is not particularly limited but the silane coupling agent and/or a hydrolytic condensate thereof is preferably contained to a concentration of 0.01 to 100 g/L in the treating solution. If the content of the silane coupling agent and/or a hydrolytic condensate thereof is less than 0.01 g/L, the corrosion resistance and the adhesion to the coating layer may be insufficient, whereas if it exceeds 100 g/L, the addition effect is saturated and this is unprofitable. It is preferred that after the chemically converted layer is formed by coating and drying the treatment solution, the chemically converted layer comprises a siloxane coupling formed by reaction of the silane coupling agent and/or a hydrolytic condensate thereof.

The water-dispersible silica is not particularly limited in the content but is preferably contained to a concentration of 0.05 to 100 g/L as the solid content in the treating solution. If the water-dispersible silica content is less than 0.05 g/L, the effect of enhancing the corrosion resistance may be insufficient, whereas if it exceeds 100 g/L, the effect of enhancing the corrosion resistance is not obtained but conversely, the stability of the metal surface-treating agent in a bath may decrease. The chemically converted layer after the coating and drying preferably contain the silica in an amount of 0.01 to 99.9% by mass, more preferably 1 to 60% by mass based on the solid content of the coating.

The content of the zirconium compound and/or titanium compound is also not particularly limited but these compounds are each preferably contained to a concentration of 0.01 to 50 g/L as the amount of zirconium or titanium in the treating solution. If the content of each compound is less than 0.01 g/L, insufficient corrosion resistance may result, whereas if it exceeds 50 g/L, the effect of enhancing the working adhesion performance is low and conversely, the stability in bath may decrease. The chemically converted layer after the coating and drying preferably contain the zirconium compound and/or titanium compound in an amount of 0.01 to 99.9% by mass, more preferably 1 to 50% by mass based on the solid content of the layer.

The amount of the water-soluble resin added is also not particularly limited but the water-soluble resin is preferably added to a concentration of 0.01 to 100 g/L in the treating solution. If the concentration of the water-soluble resin is less than 0.1 g/L, the effect of enhancing the bending adhesion may be insufficient, whereas if it exceeds 100 g/L, the effect of enhancing the bending adhesion and deep-drawing property is saturated and this is unprofitable. The chemically converted layer after the coating and drying preferably contains the resin in an amount of 0.01 to 99.9% by mass, more preferably 1 to 80% by mass based on the solid content of the layer.

When the treating solution for use in the present invention contains phosphate ions, the corrosion resistance can be more enhanced and this is more preferred. The phosphate ions can be added by adding a compound capable of forming phosphate ions to a chemical conversion treating solution for forming the chemically converted layer of the present invention. Examples of this compound include generally-known compounds such as phosphoric acid, phosphates represented by Na₃PO₄, Na₂HPO₄ and NaH₂PO₄, condensed phosphoric acid (e.g., condensed phosphoric acid, polyphosphoric acid, metaphosphoric acid, pyrophosphoric acid and ultraphosphoric acid) and salts thereof. These compounds may be used individually or in combination of two or more thereof. As for the amount of the phosphate ions added to the chemical conversion treating agent, a concentration of 0.01 to 100 g/L in the treating agent used in the present invention is preferred. If the amount added is less than 0.01 g/L, the effect of improving the corrosion resistance may be insufficient, whereas if it exceeds 100 g/L, excessive etching may proceed in the galvanized steel material to cause reduction in the performance or the water-soluble resin may be gelled and therefore, this is not preferred. The chemically converted layer after the coating and drying preferably contains the phosphoric acid compound in an amount of 0.01 to 99.9% by mass, more preferably 1 to 40% by mass based on the solid content of the layer.

In the treating solution for use in the present invention, other generally-known components may be blended. For example, a generally-known rust-preventing agent for improving the corrosion resistance, such as tannic acid or a salt thereof, phytic acid or a salt thereof, and thiocarbonyl group-containing compound, and a generally-known leveling agent, a wettability enhancing agent and a defoaming agent may be used. Within the range of not impairing the performance, an acid, an alkali or the like may be further added so as to adjust the pH.

The chemically converted layer is preferably formed on the metal sheet by coating the above-described chemical conversion treating agent on a metal sheet and baking/drying it, because the production efficiency is high. The baking temperature is preferably from 50 to 250°C. If the baking temperature is less than 50°C, the water content evaporates at a low rate and a satisfactorily high layer-forming property cannot be obtained, as a result, the rust preventive force becomes insufficient, whereas if it exceeds 250°C, the alkyl moiety of the silane coupling agent or the water-soluble resin, which are an organic material, undertakes denaturation such as thermal decomposition and the adhesive property or corrosion resistance decreases. The baking temperature is more preferably from 70 to 160°C. In the hot air drying, drying for 1 second to 5 minutes at a peak metal temperature of 50°C or more is preferred, because the production can be performed without decreasing the production efficiency.

The coating method of the chemical conversion treating solution is not particularly limited and a generally-known coating method such as roll coating, ringer roll coating, air spraying, airless spraying or dipping may be employed. The chemical conversion treating solution is preferably coated by a general continuous coating line fully furnished with these coating devices, called a coil coating line or a sheet coating line, because the coating work can be performed with good efficiency and mass production can be achieved.

The amount of the chemically converted layer attached is preferably from 1 to 500 mg/m² as the solid content. If the amount attached is less than 1 mg/m², a sufficiently high working adhesion cannot be ensured, whereas if it exceeds 500 mg/m², the working adhesion rather decreases.

The resin for forming a coating layer on the chemically converted layer in the precoated metal sheet of the present invention may be in any form such as aqueous system, solvent system or powder system. As for the kind of resin, a generally-known resin such as polyacryl-base resin, polyolefin-base resin, polyurethane-base resin, epoxy-base resin, polyester-base resin, polybutyral-base resin or melamine-base resin may be used as it is or in combination.

The coating layer of the precoated metal sheet of the present invention must contain from 1 to 140 parts by mass of an aluminum phosphate-base pigment per 100 parts by mass of the resin solid content. If the amount of the aluminum phosphate-base pigment added is less than 1 part by mass, there is no effect on galling of the coating layer by the mold at the press-forming and this is improper. As the amount of the aluminum phosphate-base pigment added is larger, the effect on galling of the coating layer at the press-forming is advantageously higher, however, if the amount added exceeds 140 parts by mass, the workability as the precoated metal sheet greatly deteriorates and this is improper.

Examples of the aluminum phosphate-base pigment which can be used include generally-known pigments such as aluminum dihydrogentripolyphosphate and aluminum metaphosphate. Among these, aluminum dihydrogentripolyphosphate is easily available and more preferred. Examples of the aluminum dihydrogentripolyphosphate which can be used include commercially available products such as "K-WHITE" produced by Tayca Corporation.

In the coating layer of the precoated metal sheet of the present invention, a rust-preventive pigment capable of exerting a rust-preventing effect is preferably added in addition to the aluminum phosphate-base pigment, because the corrosion resistance is improved. As the amount of the rust-preventive pigment added become larger, the effect exerted becomes advantageously higher, however, the total content of the aluminum phosphate-base pigment and the rust-preventive pigment is suitably 140 parts by mass or less per 100 parts by mass of the resin solid content. If the total amount of the aluminum phosphate-base pigment and rust-preventive pigment added exceeds 140 parts by mass, this sometimes causes troubles and, for example, the workability at the bending of precoated metal sheet greatly deteriorates.

The rust-preventive pigment added to the coating layer of the precoated metal sheet of the present invention may be a generally-known rust-preventive pigment. Examples thereof include (1) phosphoric acid-base rust-preventive pigments such as zinc phosphate and iron phosphate, (2) molybdic acid-base rust-preventive pigments such as calcium molybdate, aluminum molybdate and barium molybdate, (3) vanadium-base rust-preventive pigments such as vanadium oxide, (4) chromate-base rust-preventive pigments such as strontium chromate, zinc chromate, calcium chromate, potassium chromate and barium chromate, and (5) fine particle silicas such as water-dispersible silica, fumed silica and calcium ion-exchanging silica. Among the silica-base pigments of (5), calcium ion-exchanging silica is preferred, because this silica is harmless in view of environment and has a great rust-preventing effect and when this is added as the rust-preventive pigment, a higher rust-preventing effect is exerted. Examples of the calcium ion-exchanging silica which can be used include "Shieldex" produced by Grace. These rust-preventive pigments may be added in combination of a plurality of species. However, the chromate-base rust-preventive pigments of (4) have an environmental problem and these are preferably not used.

In the coating layer of the precoated metal sheet of the present invention, a known pigment generally called an extender pigment or a coloring pigment for the purpose of coloration may be used and added in combination with those aluminum phosphate-base pigment and rust-preventive pigment. The extender pigment is a generic term of pigments added so as to improve various performances which the coating layer is required to have, such as brittleness of the coating layer or masking property after the coating. Examples thereof include talc capable of playing a role of filling or matting the coating layer, titanium white (titanium oxide) for improving the masking property of the coating layer, and silica for matting the coating layer or improving the anti-scratch property of the coating layer. When this extender pigment is added, various performances described above are advantageously improved. Examples of the coloring pigment which can be used include generally-known coloring pigments including inorganic pigments such as titanium oxide (TiO₂), zinc oxide (ZnO), zirconium oxide (ZrO₂), calcium carbonate (CaCO₃), barium sulfate (BaSO₄), alumina (Al₂O₃), kaolin clay, carbon black and iron oxide (Fe₂O_{3'} Fe₃O₄), and organic pigments. A plurality of these extender pigments and coloring pigments having different effects are preferably used in combination, because respective effects can be exerted. In the case of adding the extender pigment and coloring pigment, the amount added of all pigments as a total of aluminum phosphate-base pigment, rust-preventive pigment, extender pigment and coloring pigment is suitably 140 parts by mass or less per 100 parts by mass of the resin solid content in the coating material. If the amount added of all pigments exceeds 140 parts by mass, this sometimes incurs troubles and, for example, the workability at the bending of the precoated metal sheet greatly deteriorates.

In the precoated metal sheet of the present invention, the layer thickness of the coating layer containing the aluminum phosphate-base pigment is not particularly specified, however, various performances of the coating layer vary according to the layer thickness and therefore, the layer thickness must be appropriately selected depending on the case but this is preferably from 1 to 50 µm. If the layer thickness is less than 1 µm, the corrosion resistance decreases in some cases, whereas if it exceeds 50 µm, the workability of the coating layer may deteriorate.

In the precoated metal sheet of the present invention, the coating layer containing the aluminum phosphate-base pigment is preferably formed by previously preparing a coating material containing the pigment in an amount prescribed in the present invention based on the resin solid content and coating, drying and curing the coating material, whereby good production efficiency is attained. The coating material may be used in any form such as solvent-type coating material, aqueous coating material, melting-type coating material, powder coating material, electrodeposition coating material, ultraviolet-curable coating material or electron beam-curable coating material. The coating material can be applied by a generally-known coating method, for example, roll coating, curtain flow coating, roller curtain coating, die coating, air spraying, airless spraying, electrodeposition coating, powder coating, dipping, bar coating or brush coating. The coating material is preferably applied by a general continuous coating line fully furnished with roll coating, curtain flow coating and roller curtain coating, called a coil-coating line or sheet-coating line, because the coating work can be performed with good efficiency and mass production can be attained. The coating material can be dried and cured by a generally-known dry curing method such as hot air oven, direct fire-type oven, far infrared oven or induction heating-type oven. When the coating material is an ultraviolet-curable coating material, a generally-known ultraviolet irradiation device may be used, and in the case of an electron beam-curable coating material, a generally-known electron beam irradiation device may be used.

In the precoated metal sheet of the present invention, a topcoat layer may be further provided on the coating layer containing the aluminum phosphate-base pigment within the range of not inhibiting the press-formability. By providing the topcoat layer, the coating appearance, color appearance, design appearance and other coating layer performances of the precoated metal sheet are advantageously more enhanced. The layer thickness of the top coating material is not particularly specified but this is preferably from 1 to 50 µm. If the topcoat layer thickness is less than 1 µm, the design appearance may not be imparted, whereas if it exceeds 50 µm, the coating unevenness or the like may be generated to impair the appearance or deteriorate the workability of the coating layer. The top coating material may be coated in two or more layers, if desired. The topcoat layer can be formed by applying, drying, baking and thereby curing a generally-known top coating material. Examples of the generally-known top coating material include a polyester-base top coating material, an epoxy-base top coating material, a urethane-base top coating material, an acryl-base top coating material and a melamine-base top coating material. The top coating material may be used in any form such as solvent-type coating material, aqueous coating material, powder coating material, electrodeposition coating material, ultraviolet-curable coating material and electron beam-curable coating material. The top coating material may contain a generally-known coloring pigment or extender pigment such as titanium oxide (TiO₂), zinc oxide (ZnO), zirconium oxide (ZrO₂), calcium carbonate (CaCO₃), barium sulfate (BaSO₄), alumina (Al₂O₃), kaolin clay, carbon black, iron oxide (Fe₂O₃, Fe3O₄), talc and silica. For the top coating material, a generally-known design coating material such as orange peel tone coating material, crepe tone coating material, hammer tone coating material, matted tone coating material, metallic tone coating material, pearl tone coating material or texture coating material may also be used. The top coating material may be applied by a generally-known coating method such as roll coating, curtain flow coating, roller curtain coating, die coating, air spraying, airless spraying, electrodeposition coating, powder coating, dipping, bar coating or brush coating. The top coating material is preferably coated by a general continuous coating line fully furnished with roll coating, curtain flow coating and roller curtain coating, called a coil coating line or a sheet coating line, because the coating work can be performed with good efficiency and mass production can be attained. The top coating material can be dried and baked by a generally-known drying and baking method such as hot air oven, direct fire-type oven, far infrared oven or induction heating-type oven. When the top coating material is an ultraviolet-curable coating material, a generally-known ultraviolet irradiation device may be used, and in the case of an electron beam-curable coating material, a generally-known electron beam irradiation device may be used.

The metal sheet for use in the precoated metal sheet of the present invention is not particularly limited but examples of the metal sheet which can be used include generally-known metal sheets such as cold-rolled steel sheet, hot-rolled steel sheet, stainless steel sheet and aluminum sheet, and plated metal sheets obtained by subjecting one surface or both surfaces of those metal sheets to a hot-dip plating treatment such as hot-dip galvanizing, hot-dip galvannealing, aluminum plating, aluminum-zinc alloyed plating, alumina-magnesium-zinc plating, aluminum-magnesium-silicon-zinc plating and lead-tin plating, an electroplating treatment such as electrogalvanizing, zinc-nickel electroplating, zinc-iron electroplating, zinc-chromium electroplating, copper plating, nickel plating and chromium plating, or a plating treatment by a dry process such as vacuum deposition. Among these, metal sheets having a plating layer are preferred because excellent corrosion resistance is attained. Before the chemical conversion treatment, the metal sheet may be subjected to a normal treatment such as warm water washing and alkali degreasing.

### Examples

The test materials used in experiments are described in detail below.
1. Metal Sheet
   The following metal blanks were used in experiments.
   (a) Hot-Dip Galvanized Steel Sheet (GI)
      Thickness of sheet: 0.6 mm, amount attached in terms of zinc: 60 g/m² per one surface (both surfaces were plated).
   (b) Electrogalvanized Steel Sheet (EG)
      Thickness of sheet: 0.6 mm, amount attached in terms of zinc: 20 g/m² per one surface (both surfaces were plated).
   (c) 55% Alloyed Aluminum Zinc Plated Steel Sheet (GL)
      Thickness of sheet: 0.6 mm, amount attached in terms of zinc: 90 g/m² per one surface (both surfaces were plated).
   (d) Zn-11% Aluminum-3% Magnesium-0.2% Silicon Plated Steel Sheet (SD)
      Thickness of sheet: 0.6 mm, amount attached in terms of zinc: 60 g/m² per one surface (both surfaces were plated).
   (e) Cold-Rolled Steel Sheet (CR)
      Thickness of sheet: 0.6 mm.
2. Chemical Conversion Treating Solution
   The following solutions were prepared as the chemical conversion treating solution used in experiments.
   (a) Chemical Conversion Treating Solution (A)
      An aqueous solution containing 5 g/liter of a silane coupling agent, 1.0 g/liter of a water-dispersible silica, 0.5 g/liter (as zirconium ions) of a zirconium compound and 25 g/liter of an aqueous acrylic resin was prepared and used as the chemical conversion treating solution. Here, the silane coupling agent used was γ-glycidoxypropyltrimethoxysilane, the water-dispersible silica was "Snowtex-N" produced by Nissan Chemicals Industries, Ltd., the zirconium compound was ammonium zirconyl carbonate, and the aqueous acrylic resin was polyacrylic acid.
   (b) Chemical Conversion Treating Solution (B)
      An aqueous solution containing 5 g/liter of a silane coupling agent, 1.0 g/liter of a water-dispersible silica, 0.5 g/liter (as titanium ions) of a titanium compound and 25 g/liter of an aqueous acrylic resin was prepared and used as the chemical conversion treating solution. Here, the silane coupling agent used was γ-glycidoxypropyltrimethoxysilane, the water-dispersible silica was "Snowtex-N" produced by Nissan Chemicals Industries, Ltd., the titanium compound was titanium hydrofluoride, and the aqueous acrylic resin was polyacrylic acid.
   (c) Chemical Conversion Treating Solution (C)
      An aqueous solution containing 5 g/liter of a silane coupling agent, 1.0 g/liter of a water-dispersible silica, 0.5 g/liter (as zirconium ions) of a zirconium compound, 25 g/liter of an aqueous acrylic resin and 0.5 g/liter of phosphoric acid was prepared and used as the chemical conversion treating solution. Here, the silane coupling agent used was γ-glycidoxypropyltrimethoxysilane, the water-dispersible silica was "Snowtex-N" produced by Nissan Chemicals Industries, Ltd., the zirconium compound was ammonium zirconyl carbonate and the aqueous acrylic resin was polyacrylic acid.
   (d) Chemical Conversion Treating Solution (D)
      For comparison, a commercially available coating material for chromate treatment, "ZM-1300AN" produced by Nihon Parkerizing Co., Ltd., was used.
   (e) Chemical Conversion Treating Solution (E)
      For comparison, a commercially available coating material for zinc phosphate treatment, "PALBOND" produced by Nihon Parkerizing Co., Ltd., was used.
3. Coating Material Containing Aluminum Phosphate
   An aluminum phosphate-base pigment and if desired, a rust-preventive pigment were added to each of commercially available polyester-base, urethane-base and epoxy-base clear coating materials all completely free of a pigment and stirred to prepare coating materials having the composition shown in Table 1. The aluminum phosphate-base pigment used was "K-G105" produced by Tayca Corporation. The rust-preventive pigment used was "NP-530" produced by Toho Ganryo as a zinc phosphate-base rust-preventive pigment (shown as "Zn phosphate" in Table 1), "Shieldex-C303" produced by Grace as a calcium ion-exchanging silica (shown as "Ca-Si" in Table 1) or a commercially available strontium chromate as a chromium-base rust-preventive pigment (shown as "Sr-Cr" in Table 1). The amount added of each pigment is shown in Table 1. Additionally, if desired, an extender pigment was used and the extender pigment used was "Aerosil 300" produced by Nippon Aerosil as a commercially available fine particle silica (shown as "silica" in Table 1) or a titanium oxide "CR-95" produced by Ishihara Sangyo Kaisha Ltd. as a white pigment (shown as "titanium white" in Table 1). The amount added of each pigment is shown in Table 1.
4. Top Coating Material
   A commercially available polyester-base top coating material "FL100HQ" produced by Nippon Paint Co., Ltd. was used. The color was white base.
5. Back Coating Material
   A commercially available polyester-base top coating material "FL100HQ" produced by Nippon Paint Co., Ltd. was used. The color was gray base.
6. Preparation of Precoated Metal Sheet
   Each metal sheet was degreased by dipping it in an aqueous solution of FC-364S (produced by Nihon Parkerizing Co., Ltd.) at a concentration of 2 mass% and a temperature of 60°C for 10 seconds, then washed with water and dried. Thereafter, Chemical Conversion Treating Solution (A), (B), (C) or (D) was coated on both surfaces of each metal sheet by a roll coater and dried in a hot air drying furnace to obtain a chemically converted layer. As for the amount of chemical conversion treating solution attached, Chemical Conversion Treating Solutions (A), (B) and (D) each was coated such that the amount of the entire dry layer attached became 25 mg/m², Chemical Conversion Treating Solution (C) was coated such that the amount attached became 50 mg/m² in terms of metal chromium, and Chemical Conversion Treating Solution (D) was coated such that the amount of the entire dry layer attached became 200 mg/m². In the specimen using Chemical Conversion Treating Solution (E), the chemically converted layer was obtained by dipping the degreased metal sheet in Chemical Conversion Treating Solution (E) for 2 minutes and drying it in a hot air drying furnace. Chemical Conversion Treating Solution (E) was coated such that the amount of zinc phosphate attached became 2 g/m². The peak metal temperature at the chemical conversion and drying was set to 60°C.

Thereafter, a coating material containing an aluminum phosphate-base pigment was coated on one surface of each chemical conversion-treated metal sheet by a roll coater to have a dry thickness of 5 µm and a back coating material was coated on another surface by a roll coater to have a dry thickness of 5 µm. These coating materials were dried and cured in an induction heating furnace while blowing hot air under the conditions of giving a peak metal temperature of 210°C, thereby obtaining a coating layer. The coated metal sheet after drying and baking was sprayed with water and thereby cooled. Subsequently, a top coating material was coated on the coating layer containing an aluminum phosphate-base pigment by a roll coater to have a dry thickness of 15 µm and then dried and baked in an induction heating furnace while blowing hot air under the conditions of giving a peak metal temperature of 230°C. The coated metal sheet after drying and baking was sprayed with water and thereby cooled. In this manner, precoated metal sheets as the test material was obtained.

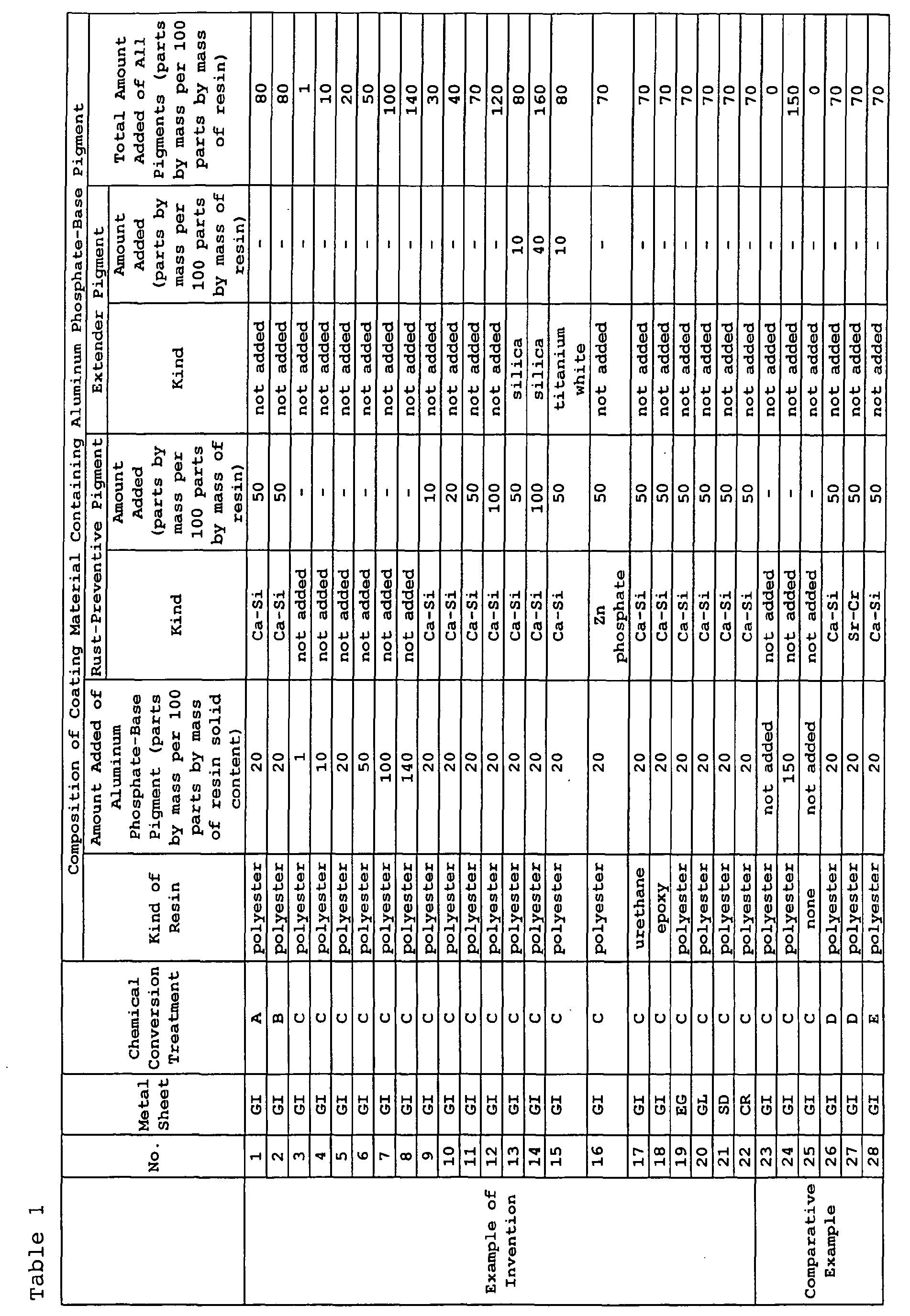

The thus-prepared precoated metal sheets were subjected to the following evaluation tests. In all of these tests, the surface coated with a coating material containing an aluminum phosphate-base pigment was used as a surface for evaluation.
1. Working Adhesion Test of Coating Layer
   Each precoated metal sheet prepared was bent at 180° and the coating layer in the worked part was observed through a magnifier at 20 magnification to examine the presence or absence of cracks of the coating layer. At the bending test, the bending was performed such that the surface coated with a coating material containing an aluminum phosphate-base pigment was outside.
   Furthermore, a pressure-sensitive adhesive tape was fixed to the worked part and powerfully peeled off and the residual state of the coating layer was observed with an eye. In this test, the tape-peeling was performed twice. The bending was performed by OT working in an atmosphere of 20°C.
   In the evaluation of coating layer cracking, the coating layer completely free of cracks was rated Ⓞ, the coating layer having about 1 to 3 very small cracks was rated ○, the coating layer having very small cracks throughout the surface was rated Δ, and the coating layer having large cracks clearly observable even with an eye throughout the worked part was rated ×.
   In the evaluation of residual state of the coating layer after tape-peeling, the coating layer not separated at all and remaining on the steel sheet was rated Ⓞ, the coating layer partially undergoing slight separation was rated ○, the coating layer partially undergoing serious separation was rated Δ, and the coating layer separated almost throughout the bend-worked part was rated ×.
   Each precoated metal sheet after the OT working was dipped in boiling water for 1 hour, then taken out and left standing for 24 hours and thereafter, the worked part of the coating layer was subjected to tape-peeling. In the evaluation of residual state of the coating layer, the coating layer not separated at all and remaining on the plated steel sheet was rated Ⓞ, the coating layer partially undergoing slight separation was rated ○, the coating layer partially undergoing serious separation was rated Δ, and the coating layer separated almost throughout the bend-worked part was rated ×.
2. Galling Test of Coating Layer by Bead
   A "Test Method of Galling of Coating Layer by Bead" (see, JIII Journal of Technical Disclosure No. 96-1078) was performed, which is a test method of reproducing the separation of coating layer of a precoated metal sheet generated due to galling of the coating layer by a press metal mold at the press-forming of the precoated metal sheet. First, the precoated metal sheet prepared was cut into a specimen of 30 mm (width) × 300 mm (length). This specimen was sandwiched by a flat metal mold and a metal mold having provided thereon a bead having a radius R of 4 mm. At this time, the specimen was sandwiched such that the bead of the metal mold was pressed against the surface coated with a coating material containing an aluminum phosphate-base pigment (surface for evaluation), and a load of 1 ton was applied to press the bead part of the metal mold to the surface for evaluation of the precoated metal sheet. In this state, the precoated metal sheet was drawn out at a rate of 200 mm/min and the separated state of the coating layer on the surface for evaluation of the precoated metal sheet rubbed by the bead was observed with an eye and evaluated.
   In the evaluation, the coating layer not separated at all was rated Ⓞ, the coating layer very partially separated was rated ○, the coating layer separated in an area ratio of about 20% or more based on the portion rubbed by the bead was rated Δ, and the coating layer entirely separated was rated ×.
3. Corrosion Resistance Test

The surface coated with a coating material containing an aluminum phosphate-base pigment of the precoated metal sheet prepared was cut by a cutter to form scratches piecing the coating layer and reaching the metal sheet. Furthermore, the end face part was cut off such that the burr at the cutting came to the surface coated with a back coating material (lower burr). Thus, a sample for corrosion resistance test was prepared. The sample was then subjected to a salt spray test by the method described in JIS K 5400-9.1. The salt water was sprayed on the surface coated with a coating material containing an aluminum phosphate-base pigment. The test time was 120 hours when the blank of the precoated metal sheet was a cold-rolled steel sheet, 240 hours when the blank was an electrogalvanized steel sheet, and 360 hours when the blank was a hot-dip galvanized steel sheet, a 55% alloyed aluminum zinc plated steel sheet or a Zn-11% aluminum-3% magnesium-0.2% silicon plated steel sheet.

In the evaluation of coating layer at the cut part, the sample having a maximum blister width of less than 1 mm at one side of the cutting was rated Ⓞ, the sample of 2 mm to less than 3 mm was rated ○, the sample of 3 mm to less than 5 mm was rated Δ, and the sample of 5 mm or more was rated ×.

In the evaluation of the cut end face part, the sample having a blister width of less than 2 mm from the end face was rated Ⓞ, the sample of 2 mm to less than 3 mm was rated ○, the sample of 3 mm to less than 5 mm was rated Δ, and the sample of 5 mm or more was rated ×.

The evaluation results are shown in detail below.

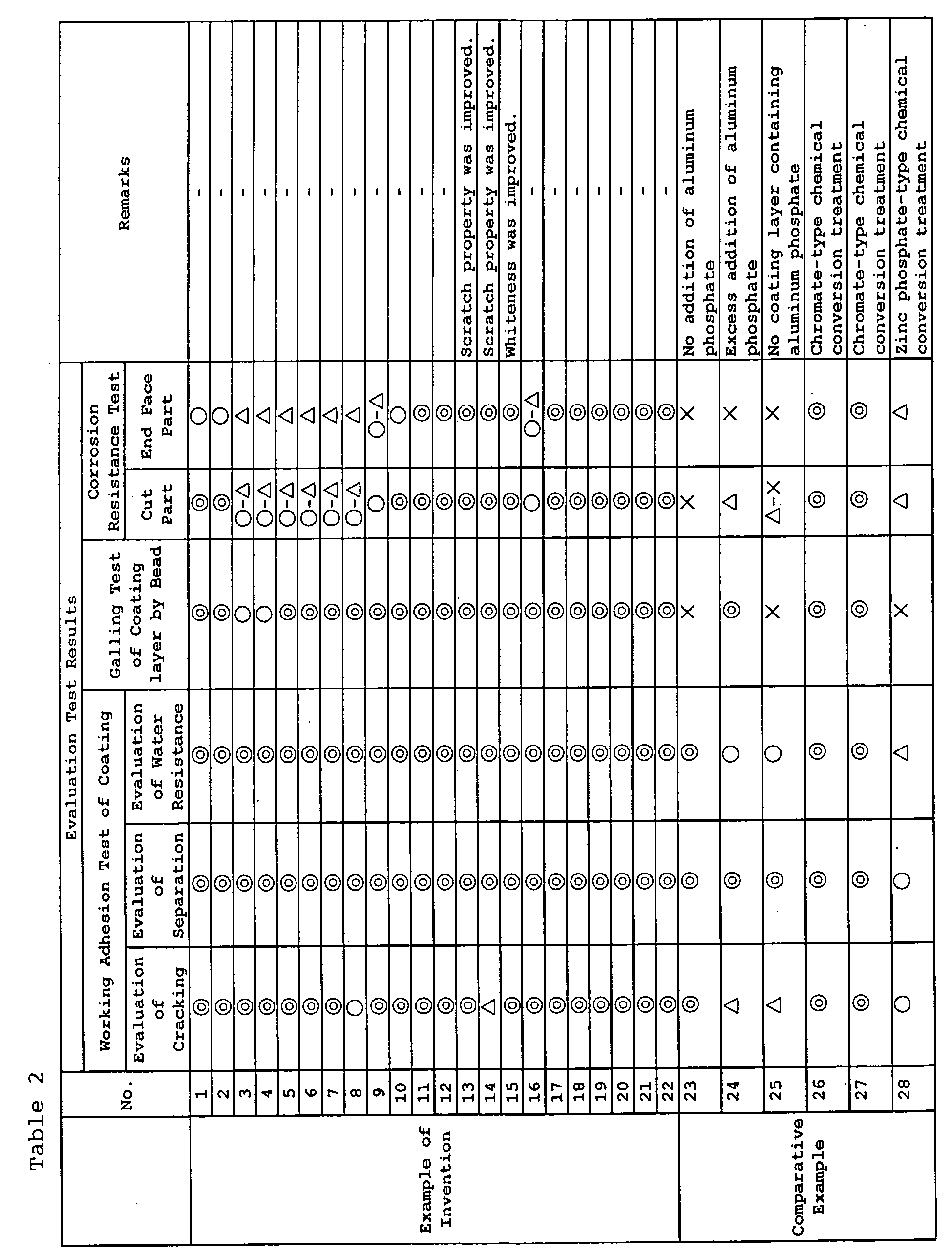

The evaluation test results of precoated metal sheets prepared are shown in Table 2. In the precoated metal sheets of the present invention (Example Nos. 1 to 22 of the Invention), the coating layer is difficult to separate in the galling test of coating layer by bead as compared with the metal sheet using a conventional non-chromate chemical conversion treatment such as zinc phosphate treatment (Comparative Example No. 28) and this reveals that the precoated metal sheets of the present invention are superior. Also, as compared with those where in the coating layer on the chemically converted layer, an aluminum phosphate-base pigment is not added (Comparative Example No. 23) or an aluminum phosphate-base pigment is added in an amount of less than 1 part by mass per 100 parts by mass of the resin solid content (Comparative Example No. 24), the coating layer is difficult to separate in the galling test of coating layer by bead and this reveals that the precoated metal sheets of the present invention are superior. In the precoated metal sheets of the present invention, when the chemically converted layer contains phosphate ions, the corrosion resistance is enhanced (comparison between Example No. 1 and Example No. 11 of the Invention) and it is more preferred to contain phosphate ions. When a rust-preventive pigment is added to the coating material in addition to the aluminum phosphate-base pigment (Example Nos. 9 to 16 of the Invention), the corrosion resistance is improved as compared with those where a rust-preventive pigment is not added (Example nos. 3 to 8 of the Invention), and therefore, it is preferred to contain a rust-preventive pigment in addition to the aluminum phosphate-base pigment. In particular, when the rust-preventive pigment is a calcium ion-exchanging silica (Example Nos. 1, 2, 9 to 15 and 17 to 22 of the Invention), the corrosion resistance is more improved and moreover, the corrosion resistance is equal to that obtained when a conventional chromate-type chemical conversion treatment is applied (Comparative Example Nos. 26 and 27), therefore, it is preferred that the rust-preventive pigment is a calcium ion-exchanging silica.

### Industrial Applicability

According to the present invention, a precoated metal sheet excellent in the working adhesion of coating layer and the corrosion resistance and very suitable for press-forming can be provided without using hexavalent chromium, which is considered to be environmentally not-preferred. Accordingly, the present invention has a very high industrial value.

## Claims

1. A precoated metal sheet with excellent press-formability, comprising a metal sheet having on one surface or both surfaces thereof a chemically converted layer formed by coating and drying a treating solution containing, in terms of solid contents, (a) at least one of a silane coupling agent and a hydrolytic condensate thereof, (b) a water-dispersible silica, (c) at least one of a zirconium compound and a titanium compound and (d) a water-soluble resin as essential components, and having further formed thereon a coating layer containing from 1 to 140 parts by mass of an aluminum phosphate-base pigment per 100 parts by mass of the resin solid content.

2. The precoated metal sheet with excellent press-formability as claimed in claim 1, wherein said treating solution further contains phosphate ions.

3. The precoated metal sheet with excellent press-formability as claimed in claim 1, wherein the aluminum phosphate-base pigment contained in said layer is aluminum dihydrogentripolyphosphate.

4. The precoated metal sheet with excellent press-formability as claimed in claim 1 or 3, wherein said layer contains a rust-preventive pigment in addition to the aluminum phosphate-base pigment and the total content of the aluminum phosphate-base pigment and the rust-preventive pigment is 140 parts by mass or less per 100 parts by mass of the resin solid content.

5. The precoated metal sheet with excellent press-formability as claimed in claim 4, wherein the rust-preventive pigment contained in said layer is a calcium ion-exchanging silica.

6. The precoated metal sheet with excellent press-formability as claimed in any one of claims 1 to 5, wherein the metal sheet is a metal sheet having a plating layer on one surface or both surfaces thereof.

7. A method for producing a precoated metal sheet with excellent press-formability, comprising coating a treating solution containing (a) a silane coupling agent and/or a hydrolytic condensate thereof, (b) a water-dispersible silica, (c) a zirconium compound and/or a titanium compound and (d) a water-soluble resin as essential components on one surface or both surfaces of a metal sheet, drying the treating solution to form a chemically converted layer, applying thereon a coating material containing from 1 to 140 parts by mass of an aluminum phosphate-base pigment per 100 parts by mass of the resin solid content, and drying and thereby curing the coating material.

8. The method for producing a precoated metal sheet with excellent press-formability as claimed in claim 7, wherein said treating solution further contains phosphate ions.

9. The method for producing a precoated metal sheet with excellent press-formability as claimed in claim 7, wherein said coating material further contains a rust-preventive pigment and the total content of said rust-preventive pigment and aluminum phosphate-base pigment is 140 parts by mass or less per 100 parts by mass of the resin solid content.

10. A shaped article having the coating layer on the outer appearance, obtained by cutting and press-forming the precoated metal sheet claimed in any one of claims 1 to 6.

11. A method for producing a shaped article, comprising cutting and press-forming the precoated metal sheet claimed in any one of claims 1 to 6 and holding the coating layer of the shaped article without removing it.
